# EUROPEAN PATENT APPLICATION

(11) **EP 1 710 537 A1**
(43) Date of publication of application: **11.10.2006**
(21) Application number: 04799949.5
(22) Date of filing: 30.11.2004
(51) Int. Cl.: G01C 21/00, G08G 1/09, G08G 1/0969

(54) **NAVIGATION DEVICE**

(30) Priority: 05.12.2003 JP 2003407250
(71) Applicant: MATSUSHITA ELECTRIC INDUSTRIAL CO., LTD., Kadoma-shi, Osaka 571-8501 (JP)
(72) Inventor: NOMURA, K., Matsushita Electric Ind. Co., Ltd., Osaka-shi, Osaka 540-6319 (JP); TATAMI, Shigeru, Matsushita Electric Ind. Co., Ltd, Osaka-shi, Osaka 540-6319 (JP); KOBAYASHI, A., Matsushita Electric Ind. Co., Ltd., Osaka-shi, Osaka 540-6319 (JP); HATAKEYAMA, T, Matsushita Electric Ind. Co., Ltd., Osaka-shi, Osaka 540-6319 (JP)
(74) Representative: Pautex Schneider, Nicole Véronique
(86) International application number: PCT/JP2004/018099
(87) International publication number: WO 2005/054783

(57) **Abstract**

Present location data positioned by present location positioner (1) and an image of the scene of the present location taken by camera (2) are transmitted to the outside via radio wave receiver/transmitter (4). On the other hand, a route from the present location to a destination is set by entry of the destination, and the location a certain value of kilometers ahead of the present location is designated by operation part (9) in the set route. Then, image data including the data on the designated location is received via radio wave receiver/transmitter (4), and the received image is displayed on display part (8). Thus, the visual scene of the location designated in the route to the destination can be received and displayed beforehand.

## Description

### TECHNICAL FIELD

The present system relates to a navigation device that has functions capable of receiving and displaying image data.

### BACKGROUND ART

A known conventional navigation device for receiving surrounding images taken by a camera can automatically provide the situations of a portion hidden behind oncoming cars, based on the images taken by the camera installed in another vehicle. When a vehicle attempts to turn to the right at an intersection where oncoming cars run, there is a strong possibility that the vehicle collides with a motorcycle hidden behind the oncoming cars invisible from the vehicle.

In another case, when a vehicle runs after a large truck and encounters an intersection or a traffic light, the traffic light is often invisible because it is blocked out by the large truck. Also known is a navigation device for receiving the image of the situations ahead of the traffic light taken from the truck in a similar manner.

Further, also known in Japanese Patent Unexamined Publication No. 2003-6797, for example, is a navigation device in which a plurality of users can communicate with each other via a center device, and when a vehicle requests an image taken from another vehicle and designates the position of the other vehicle, the center device searches the image and transmits the image to the requesting vehicle and the requesting vehicle can receive the transmitted image.

However, for the conventional navigation device, which informs a vehicle of situations in real time to enable the user of the vehicle to see a hidden motorcycle or traffic light easily, the images can be exchanged only between the member vehicles.

Therefore, an arbitrary running vehicle cannot view the images taken by any other vehicle running in the route to the destination.

### SUMMARY OF THE INVENTION

To address the above conventional problem, the present invention aims to provide a navigation device capable of receiving an image in any vehicle that is taken by another preceding vehicle in the route to the destination.

In accordance with one aspect of the present invention, there is provided a navigation device including: a present location positioning means for positioning a present location; a route setting means for inputting a destination and setting a route from the present location positioned by the present location positioning means to the destination; a location designating means for designating a predetermined location in the route from the present location to the destination set by the route setting means; an image receiving means for receiving image data having the location data designated by the location designating means, from preceding another vehicle; and a display means for displaying the image received by the image receiving means.

With this structure, the present location positioning means can position a present location, the route setting means can set a route, and the location designating means designates a location. Therefore, the image receiving means can receive an image taken at a designated location in the route, from preceding another vehicle, and the display means can display the image. Thereby, a driver of the vehicle can recognize the precise visual scene of the designated location in the route along which the driver is going to drive.

In accordance with another aspect of the present invention, there is provided a navigation device in which the location designated by the location designating means includes: a distance location indicated by a distance from the present location; and a distance range ahead of the distance location.

With this structure, even when no vehicles exist at a precise distance indicated by a certain value of meters ahead but a vehicle exists within the distance range, an image from the vehicle can be received. This structure can provide less possibility of receiving no images.

In accordance with another aspect of the present invention, there is provided a navigation device in which both distance location and distance range can arbitrarily be set.

This structure can arbitrarily set both distance location and distance range, and provide images in an arbitrary location and an arbitrary distance range

In accordance with another aspect of the present invention, there is provided a navigation device in which an image receiving means receives an image having the largest electric field strength among those having location data matching the distance location and distance range from the present location.

With this structure, even when the distance location and distance range are set arbitrarily, an image having the largest electric field strength can be received among those, and thus a clear image can be obtained.

In accordance with another aspect of the present invention, there is provided a navigation device in which preceding another vehicle is replaced with a center device, and the image data transmitted from the center device includes an image that is taken by an imaging means for taking the background of the present location of another navigation device and transmitted together with the data on the present location thereof.

This structure can provide a vivid image at a further distance via the center device, i.e. preceding another vehicle.

In accordance with another aspect of the present invention, there is provided a navigation device further including: a character recognizing means for detecting and recognizing character data when the image data received by the image receiving means includes character data; and a voice output means for synthesizing and outputting character data recognized by the character data recognizing means, by voice.

With this structure, when the received image includes characters, such as a guideboard and place name, such data is supplied by voice. Thus, the driver can recognize that such a signboard and guide sign of a place name or direction beforehand, and drive the vehicle in a more emotionally and mentally relaxed manner.

In accordance with another aspect of the present invention, there is provided a navigation device further including: a character data recognizing means for detecting and recognizing character data when the image data received by the image receiving means includes the character data; a storage means having stored data including at least predetermined one of music, image, and information according to the specific character data; an data readout means for searching the storage means based on the character recognized by the character recognizing means and reading out data corresponding to the specific character data stored in the storage means that matches the character data recognized by the character data recognizing means; and a display means for displaying, by voice or image, the data read out by the data readout means.

With this structure, when the received image includes character data, the navigation device recognizes the data, searches specific character data in the storage means based on the recognized character data, and outputs data, such as music, image, and information, corresponding to the specific data stored in the storage means. For example, the navigation device recognizes characters "Tokyo Tower" and specific character data "Tokyo Tower", information on the Tokyo Tower corresponding to the character data can be supplied.

In accordance with another aspect of the present invention, there is provided a navigation device further including: an imaging means for imaging the visual scene of the present location; and an image transmitting means for transmitting the image taken by the imaging means together with the present location data positioned by the present location positioning means.

This structure can provide image data having present location data effective to another navigation device.

As described above, the present invention includes: a present location positioning means for positioning a present location; a route setting means for inputting a destination and setting a route from the present location to the destination; a location designating means for designating a predetermined location from the present location in the route from the present location to the destination set by the route setting means; an image receiving means for receiving image data having the location data designated by the location designating means, from preceding another vehicle; and a display means for displaying the image received by the image receiving means. With this structure, the present location positioning means can position a present location, the route setting means can set a route, and the location designating means designates a location. Thus, the image receiving means can receive an image taken in a designated location in the route, from preceding another vehicle, and the display means can display the image. This structure can provide a navigation device that has an advantage of allowing a driver of the vehicle to recognize the visual scene of the designated location in the route along which the driver is going to drive.

### BRIEF DESCRIPTION OF THE DRAWINGS

Fig. 1 is a schematic block diagram of a navigation device in accordance with an exemplary embodiment of the present invention.
Fig. 2 is a first flowchart showing the operation of the navigation device in accordance with the exemplary embodiment of the present invention.
Fig. 3 is a second flowchart showing the operation of the navigation device in accordance with the exemplary embodiment of the present invention.
Fig. 4 is a schematic diagram illustrating the operation of the navigation device in accordance with the exemplary embodiment of the present invention.

### DETAILED DESCRIPTION OF PREFERRED EMBODIMENT

The exemplary embodiment of the present invention is hereinafter described with reference to the accompanying drawings.

### Exemplary Embodiment

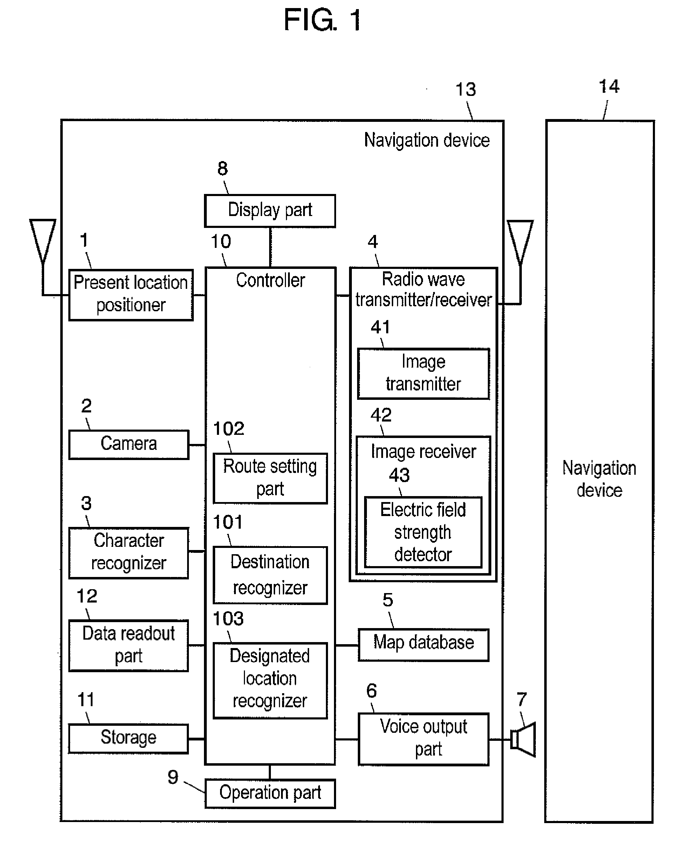

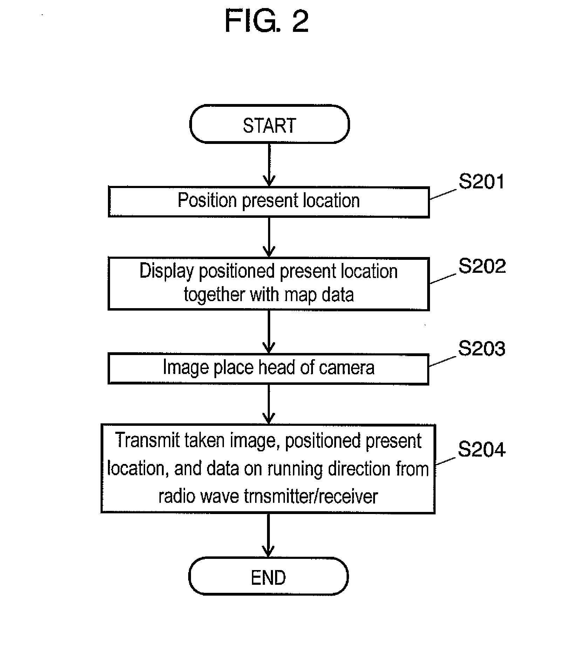

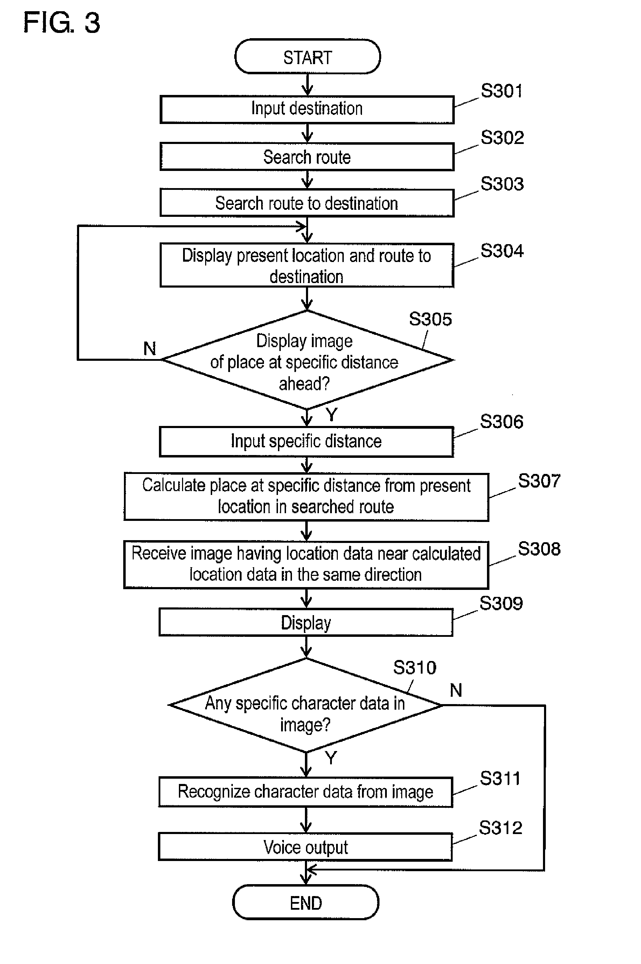

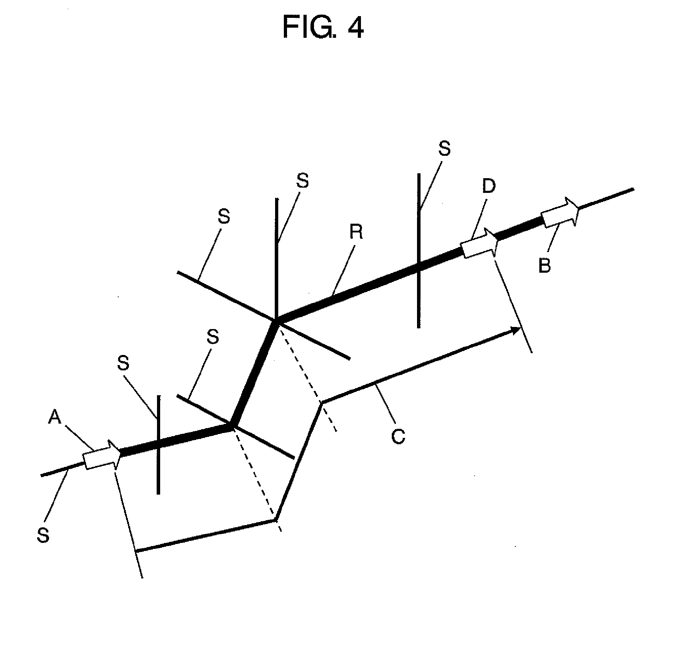

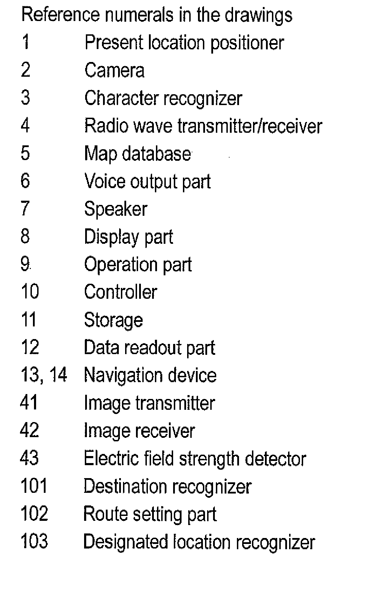

Fig. 1 shows a navigation device in accordance with the exemplary embodiment of the present invention. Figs. 2 and 3 show first and second flowcharts representing the operation of the navigation device, respectively. Fig. 4 shows a schematic diagram illustrating the operation of the navigation device.

As shown in Fig. 1, navigation device 13 of the exemplary embodiment of the present invention includes: present location positioner 1 that has a global positioning system (GPS) receiver for positioning a present location, and self-contained navigation unit; and camera 2, i.e. an imaging means for imaging visual scenes ahead or around the present location; and map database 5 having stored map data.

Further, navigation device 13 of the exemplary embodiment includes: radio wave transmitter/receiver 4 for transmitting and receiving various kinds of data including image data; character recognizer 3 for recognizing characters, when the received image includes character data; voice output part 6 for outputting a various kinds of data as voice signals; and speaker 7 connected to voice output part 6.

In other words, radio wave transmitter/receiver 4 has image transmitter 41 for transmitting images, and image receiver 42 for receiving images.

Further, navigation device 13 of the exemplary embodiment includes: display part 8 for displaying various kinds of data, such as a present location, map data, order, and command in a corresponding manner thereto; operation part 9 for inputting various kinds of orders, commands, and data items; and controller 10 for setting a route to a destination, designating a location of which image data is desired, and controlling each of these parts.

In other words, controller 10 includes: destination recognizer 101 having a function of recognizing the destination supplied from operation part 9; route setting part 102 having a function of setting a route to the destination according to a route searching order from operation part 9; and designated location recognizer 103 having a function of recognizing a location of which image data is desired and designated by operation part 9.

Next, the operation of navigation device 13 of the exemplary embodiment is described in detail.

Present location positioner 1, including a GPS receiver and self-contained navigation unit, positions the present location. The positioned present location is displayed on display part 8, under control of controller 10, together with map data accumulated in map database 5.

When a destination is supplied using operation part 9 to search a route to the destination, destination recognizer 101 of controller 10 recognizes the supplied destination. Then, a route from the present location to the destination is searched under control of route setting part 102 of controller 10, using map database 5. The searched route from the present location to the destination is shown on the map displayed on display part 8 with thicker lines or lines of different colors, for example, according to the setting.

On the other hand, camera 2 is installed, facing to the front of the vehicle, for example, to image the place ahead of the vehicle. Therefore, camera 2 images the front of the vehicle. The image taken by camera 2 is transmitted to the outside of the vehicle together with data on the present location and running direction positioned by present location positioner 1 via image transmitter 41. Of course, it is possible to provide a storage for storing the images and data to be transmitted the outside.

First, the above operation is described, using the flowchart of Fig. 2. When a present location is positioned by present location positioner 1 (S201), the positioned present location is displayed on display part 8 together with map data (S202). Then, when the front of the vehicle is imaged by camera 2 (S203), the image taken is transmitted to the outside together with data on the present location positioned by present location 1 and the running direction, via image transmitter 41 of radio wave transmitter/receiver 41 (S204).

As described above, data on the present location and running direction of the vehicle is transmitted to the outside from navigation device 13 of the running vehicle together with the image data ahead thereof.

Next, for the exemplary embodiment, as described above, when a destination is supplied using operation part 8 to search a route, the destination supplied is recognized by destination recognizer 101 of controller 10, and the route from the present location to the destination is searched under control of route setting part 102 of controller 10, using map database 5. The route from the present location to the destination is displayed on display part 8.

When the user attempts to display the image at a specific distance from the present location, the navigation device can receive, from preceding another vehicle, an image taken at the specific distance, and display the image taken thereby on display part 8.

A detailed description is provided of this point with reference to Figs. 3 and 4.

When a destination is supplied using operation part 9 (S301) to search a route (S302), destination recognizer 101 of controller 10 recognizes the supplied destination, route setting part 102 searches the route from the present location to the destination using map database 5 (S303). Then, the result is shown on the map displayed on display part 8, using thicker lines, or lines of different colors (S304), for example.

When the user operates operation part 9 to receive and display an image from the place at a specific distance from the present location (Y in S305), a screen for inputting the specific distance appears on display part 8.

If the image of the place at a specific distance from the present location is not received (N in S305), control returns to step S304, and the display part continues to display the route from the present location to the destination.

When the user operates the operation part to receive and display the image of the place at a specific distance from the present location in Y in step S305, and arbitrarily inputs the specific distance in the screen for inputting the specific distance (S306), the place at the specific distance from the present location is calculated under control of designated location recognizer 103 of controller 10 (S307) in the searched route.

Thereafter, as described with reference to the flowchart of Fig. 2, image receiver 42 of radio wave transmitter/receiver 4 receives an image of another vehicle that is running in the same direction in the searched route and has location data calculated by designated location recognizer 103, among the image data that is transmitted to the outside from navigation devices of running vehicles and has data on locations and running directions of the vehicles (S308), and the image is displayed on display part 8 (S309).

For example, when the present location of a vehicle is A and the destination thereof is in B direction, as shown in Fig. 4, the route from present location A to the destination is searched, and route R searched is shown by a line thicker than other routes S. When the user operates the navigator device to receive and display the image of the place at a specific distance, and inputs specific distance C, position D at specific distance C from present location A is calculated under control of designated location recognizer 103 of controller 10. Then, image receiver 42 of radio wave transmitter/receiver 4 receives an image having data on position D. At this time, the image receiver receives data not only on the location but also on the direction and an image of a scene in direction B toward the destination.

Therefore, in accordance with the exemplary embodiment, entry of a specific distance allows reception of an image ahead of the place at the specific distance from the present location and display of the image together with data on the location and direction, on display part 8.

When the received image includes specific character data, such as a place name and information (Y in S310), the character data is cut out from the image and recognized as characters by character recognizer 3 (S311). The character data recognized by character recognizer 3 is supplied to voice output part 6 for output from speaker 7 by voice. Therefore, for example, the place name shown under a traffic light is read out by voice, so that the driver can accurately know the name of the place at the specific distance from the present location beforehand.

Further, the navigation device includes storage 11 having stored data on the place names and information, and data readout part 12 for reading data from storage 11. This structure allows the navigation device to read out the data corresponding to specific character data stored in storage 11 that matches the character data recognized by character recognizer 3, display the readout data on display 8 by image, and output the data through speaker 7 via voice output part 6.

For example, when characters "Tokyo Tower" are recognized from image signals received by image receiver 42 and storage 11 includes specific character data "Tokyo Tower", the information on Tokyo Tower corresponding to the character data is supplied.

If storage 11 has stored music data and image data in addition to such information data, not only voice information but also music and image corresponding to the recognized characters can be provided through speaker 7 or on display part 8.

When the image received by image receiver 41 does not include specific character data, such as a place name and guide sign (N in S310), the navigation device receives image data including location data near the calculated location data in the same direction, from another vehicle, displays the data, and completes operation.

In the exemplary embodiment, the specific distance is preset to a certain distance, such as a certain value of meters and kilometers. However, this distance can have a specific distance range. In other words, it is possible not to simply specify a certain value of meters or kilometers ahead, but to specify a distance range from a certain value of meters to another value of meters, for example. This setting makes the navigation device more convenient because the device can receive images from any one of navigation devices existing in the distance range.

Additionally, when any distance range can be set in this case, the navigation device is more convenient because the device can receive an arbitrary image in an arbitrarily set range.

When the navigation device has such a distance range, the device can receive different images from a plurality of navigation devices at a time and cannot display the images on display part 8 properly in some cases. However, in this case, electric field strength detector 43 capable of receiving the image having the largest electric field is provided in image receiver 42, so that the navigation device can receive an image having the largest electric field strength only. Then, the location is calculated according to the location data received at that time to provide the distance from the present location, under control of controller 10. The distance is given to the driver on display part 8 or through speaker 7, as a certain value of meters or kilometers ahead of the vehicle.

This structure allows precise reception of an image of the place at a certain distance from the present location and proper display of the image on display part 8.

Though not having specifically referred to in the description, the images to be taken by camera 2 can be moving images and sill images. Still images can be taken at regular periods or distances, and transmitted upon being taken.

In this case, radio transmitter/receiver 4 need not be brought into the transmission state necessarily while the images are not taken. For this reason, radio transmitter/receiver 4 can be structured so as to transmit and receive data alternately. Of course, even in this case, radio transmitter/receiver 4 capable of transmission and reception at a time can be used in a similar manner to those always transmitting moving images.

This exemplary embodiment is structured so that each navigation device 13 transmits an image taken by the camera thereof and directly receives an image from navigation device 14 at a specific distance ahead of the present location of navigation device 13. Of course, it is possible to dispose a center device, i.e. preceding another vehicle, between both navigation devices.

When a center device is disposed among the navigation devices, communication between the center device and each navigation device can provide the image of a place at a further distance from the present location in real time. The center device can store the past data for a certain period of time.

As described above, the present invention can easily provide an image of the place at a predetermined distance ahead of the present location. Thus, when incorporated into a vehicle, the present invention gives feeling of security to the driver thereof.

### INDUSTRIAL APPLICABILITY

In a navigation device of the present invention, a present location positioning means can position a present location, a route setting means can set a route, and a location designating means designates a location. Thus, an image receiving means can receive an image taken by another device in a designated location in the route, and a display means can display the image. Thereby, the navigation device has an advantage of providing the precise visual scene of the designated location in the route along which the driver is going to drive beforehand. The present invention is useful as a navigation device having functions of receiving and displaying image data.

## Claims

1. A navigation device including:
a present location positioning means for positioning a present location;
a route setting means for inputting a designation and setting a route from the present location positioned by the present location positioning means to the destination;
a location designating means for designating a predetermined location from the present location in the route from the present location to the destination set by the route setting means;
an image receiving means for receiving image data having the location data designated by the location designating means, from preceding another vehicle; and
a display means for displaying an image received by the image receiving means.

2. The navigation device of claim 1, wherein the distance designated by the location designating means includes:
a distance location indicated by a distance from the present location; and
a distance range ahead of the distance location.

3. The navigation device of claim 2, wherein both distance location and distance range can arbitrarily be set.

4. The navigation device of claim 2, wherein the image receiving means receives an image having a largest electric field strength among images having location data matching the distance location and distance range from the present location.

5. The navigation device of claim 1, wherein preceding another vehicle is a center device, and image data transmitted from the center device includes an image that is taken by an imaging means for taking a background of a present location of another navigation device and transmitted together with data on the present location thereof.

6. The navigation device of claim 1 including:
a character data recognizing means for detecting and recognizing character data, when the image data received by the image receiving means includes the character data; and
a voice output means for synthesizing and outputting character data recognized by the character data recognizing means, by voice.

7. The navigation device of claim 1 including:
a character data recognizing means for detecting and recognizing character data, when the image data received by the image receiving means includes the character data;
a storage means having stored data including at least predetermined one of music, image, and information corresponding to specific character data;
a data readout means for searching the storage means based on the character data recognized by the character recognizing means, and reading out data corresponding to the specific character data stored in the storage means that matches the character data recognized by the character data recognizing means; and
a display means for displaying the data read out by the data readout means, by voice and image.

8. A navigation device of claim 1 including:
an imaging means for imaging a visual scene of the present location; and
an image transmitter for transmitting the image taken by the imaging means together with the present location data position by the present location positioning means.

## Amended claims

### Amended claims under Art. 19.1 PCT

**1.** (Amended) A navigation device including:
a present location positioning means for positioning a present location;
a route setting means for inputting a destination and setting a route from the present location positioned by the present location positioning means to the destination;
a location designating means for designating a predetermined location from the present location in the route from the present location to the destination set by the route setting means;
an image receiving means for receiving image data having location data designated by the location designating means and the route designated by the route setting means, from another device; and
a display means for displaying an image received by the image receiving means.

**2.** The navigation device of claim 1, wherein the distance designated by the location designating means includes:
a distance location indicated by a distance from the present location; and
a distance range ahead of the distance location.

**3.** The navigation device of claim 2, wherein both distance location and distance range can arbitrarily be set.

**4.** The navigation device of claim 2, wherein the image receiving means receives an image having a largest electric field strength among images having location data matching the distance location and distance range from the present location.

**5.** The navigation device of claim 1, wherein preceding another vehicle is a center device, and image data transmitted from the center device includes an image that is taken by an imaging means for taking a background of a present location of another navigation device and transmitted together with data on the present location thereof.

**6.** The navigation device of claim 1 including:
a character data recognizing means for detecting and recognizing character data, when the image data received by the image receiving means includes the character data; and
a voice output means for synthesizing and outputting character data recognized by the character data recognizing means, by voice.

**7.** The navigation device of claim 1 including:
a character data recognizing means for detecting and recognizing character data, when the image data received by the image receiving means includes the character data;
a storage means having stored data including at least predetermined one of music, image, and information corresponding to specific character data;
a data readout means for searching the storage means based on the character data recognized by the character recognizing means, and reading out data corresponding to the specific character data stored in the storage means that matches the character data recognized by the character data recognizing means; and
a display means for displaying the data read out by the data readout means, by voice and image.

**8.** A navigation device of claim 1 including:
an imaging means for imaging a visual scene of the present location; and
an image transmitter for transmitting the image taken by the imaging means together with the present location data position by the present location positioning means.
